Europäisches Patentamt

European Patent Office

Office européen des brevets

(11) Veröffentlichungsnummer: **0 434 096 A2**

(12) # EUROPÄISCHE PATENTANMELDUNG

(21) Anmeldenummer: 90125268.4

(22) Anmeldetag: 28.06.89

(51) Int. Cl.5: **B65G 47/90, B65G 61/00, B65G 57/30, B65G 57/28**

Diese Anmeldung is am 21.12.1990 als Teilanmeldung zu der unter INID-Kode 60 erwähnten Anmeldung eingereicht worden.

(30) Priorität: **01.07.88 DE 3822363**

(43) Veröffentlichungstag der Anmeldung:
**26.06.91 Patentblatt 91/26**

(60) Veröffentlichungsnummer der früheren Anmeldung nach Art. 76 EPÜ: **0 426 694**

(84) Benannte Vertragsstaaten:
**AT BE DE FR GB IT NL SE**

(71) Anmelder: **Gerlach, Karl**
**Odenwaldstrasse 22**
**W-6096 Raunheim(DE)**

(72) Erfinder: **Gerlach, Karl**
**Odenwaldstrasse 22**
**W-6096 Raunheim(DE)**

(74) Vertreter: **Katscher, Helmut, Dipl.-Ing.**
**Bismarckstrasse 29**
**W-6100 Darmstadt(DE)**

(54) **Vorrichtung zum Stapeln von Formteilen.**

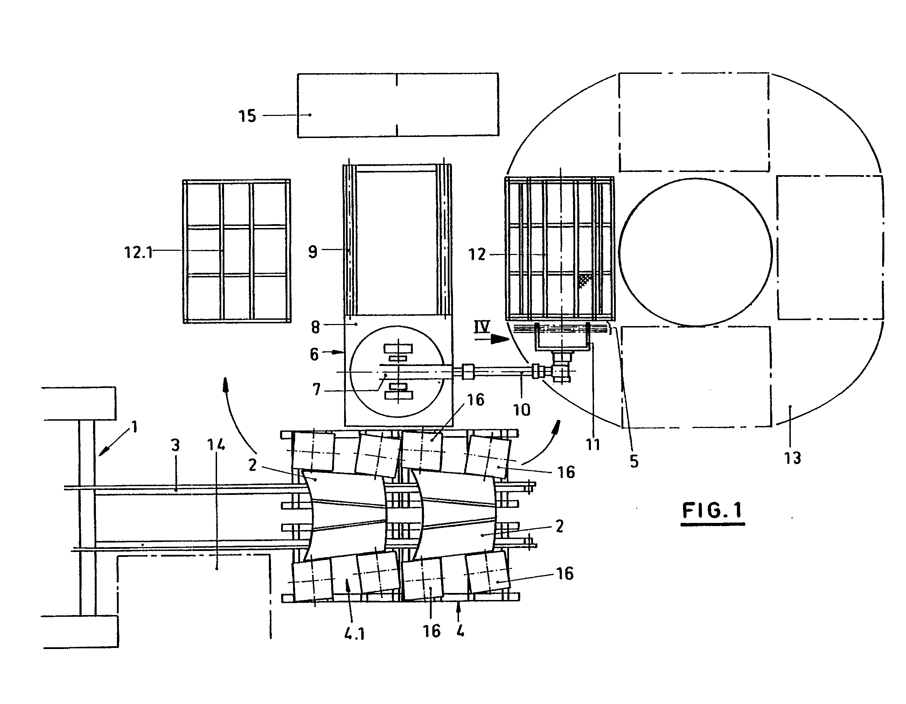

(57) Eine Vorrichtung zum Stapeln von Formteilen (2), insbesondere großen Blechstanzteilen im Automobilbau am Ende einer Pressenstraße (1) weist mindestens eine Vorstapeleinrichtung (4) auf, in der vier Hubeinheiten (16) einen Vorstapel (5) aus mehreren Formteilen (2) bilden. Der Vorstapel (5) wird von einem Industrieroboter (7) mittels eines Greiferrahmens (11) übernommen und in geordneter Stellung in einem Stapelbehälter (12) abgesetzt. Hierzu verfährt der schwenkbare Industrieroboter (7) auf einer Schlittenbahn (9) entlang dem Stapelbehälter (12). Nacharbeitsteile können in einer zweiten Vorstapeleinrichtung (4.1) gesammelt und von demselben Industrieroboter (7) aufgenommen und in einem zweiten Stapelbehälter (12.1) abgesetzt werden. Die Vorrichtung ermöglicht die vollautomatische Entsorgung von Formteilen (2) aus Pressenstraßen mit hoher Arbeitsgeschwindigkeit. (Fig. 1)

FIG.1

EP 0 434 096 A2

## VORRICHTUNG ZUM STAPELN VON FORMTEILEN

Die Erfindung betrifft eine Vorrichtung zum Stapeln von Formteilen, insbesondere großen Blechstanzteilen im Automobilbau, mit einer einen horizontalen Vorstapel von mehreren Formteilen bildenden Vorstapeleinrichtung, und mit einer den Vorstapel aufnehmenden Greifvorrichtung.

Dünnwandige Formteile, insbesondere größere Blechstanzteile für den Automobilbau, müssen zwischen den einzelnen Fertigungsstufen und beim Transport und der Zwischenlagerung vor der Weiterverarbeitung in Stapelbehältern gestapelt aufgenommen werden. Da die Oberfläche dieser Formteile in vielen Fällen gegen eine Beschädigung sehr empfindlich ist, muß bei der Stapelung dafür Sorge getragen werden, daß die Formteile in vorgegebenen Abständen zueinander gehalten werden, wobei diese Abstände jedoch möglichst gering sein sollen, damit bei vorgegebenen Abmessungen des Stapelbehälters eine möglichst große Anzahl von Formteilen aufgenommen werden kann.

Während in der Praxis die Be- und Entladung derartiger, Stapelbehälter noch von Hand erfolgt, was mit großem Arbeitsaufwand und Verletzungsgefahren verbunden ist und eine weitere Steigerung der Arbeitsgeschwindigkeit nicht zuläßt, ist bereits eine Vorrichtung bekanntgeworden (DE-A 34 16 277), die einen automatisierten Arbeitsablauf ermöglicht. Eine entlang einem Portal verfahrbare und schwenkbare Greifvorrichtung erfaßt den in der Vorstapeleinrichtung gebildeten horizontalen Stapel von mehreren Formteilen, schwenkt den Vorstapel und bringt ihn in den Stapelbehälter von dessen Stirnseite her ein. Der Baufaufwand und der Platzbedarf für diese bekannte Vorrichtung in Portalbauweise sind verhältnismäßig hoch.

Bei einer bekannten Vorrichtung der eingangs genannten Gattung (DE-A-35 02 359) werden die Formteile von oben auf einzeln zurückziehbare Auflagestücke abgelegt. Hierfür ist eine gesonderte Ablagevorrichtung erforderlich, die die Formteile vom Längsförderer übernimmt. Während der Vorstapel von der Greifvorrichtung übernommen oder für die Übernahme bereitgehalten wird, können keine Formteile für einen neuen Vorstapel abgelegt werden.

Aufgabe der Erfindung ist es daher, eine Vorrichtung der eingangs genannten Gattung so auszugestalten, daß die Formteile unmittelbar vom Längsförderer übernommen werden können und bereits ein neuer Vorstapel gebildet werden kann, während der vorher gebildete Vorstapel noch für die Übernahme bereitgehalten wird.

Diese Aufgabe wird erfindungsgemäß dadurch gelöst, daß die Vorstapeleinrichtung jeweils vier den Rand der Formteile haltende Hubeinheiten aufweist, daß jede Hubeinheit zwei unabhängig voneinander höhenverfahrbare Formteilgreifer aufweist, die einzeln horizontal zurückziehbar sind, und daß unter den beiden Formteilgreifern eine Hub- und Kippeinrichtung für einzelne Formteile angeordnet ist.

Diese Vorstapeleinrichtung ermöglicht in besonders einfacher Weise die Bildung des Vorstapels. Jeweils einer der beiden Formteilgreifer der vier Hubeinheiten dient dazu, in seiner oberen Stellung den vollständigen Vorstapel zu halten, bis er von der Greifvorrichtung übernommen wird. Währenddessen bilden die jeweils anderen vier Formteilgreifer eine gemeinsame Aufnahme, in der der nächste Vorstapel dadurch gebildet wird, daß die Hub- und Kippeinrichtung nacheinander die einzelnen Formteile erfaßt, um einen gewissen Winkel kippt, in die jeweils vorgegebene Stellung anhebt und zwischen den Formteilgreifern wieder horizontal ausrichtet, so daß das Formteil dort gehalten wird. Nachdem der obere Vorstapel von der Greifvorrichtung übernommen wurde, und der nächste Vorstapel gebildet ist, fährt dieser nach oben, während die jetzt freigewordenen Formteilgreifer zurückgezogen und nach unten gefahren werden, um zwischen sich den nächsten Vorstapel aufzunehmen.

Um eine rasche Anpassung an Formteile unterschiedlicher Abmessungen zu ermöglichen, sind die Hubeinheiten in einem Grundgestell quer und längs zu den aufzunehmenden Formteilen verstellbar aufgenommen. Zur Umstellung genügt es, die einzelnen Hubeinheiten in Querrichtung zu verfahren, bis die Formteilgreifer auf den Rand der neuen Formteile eingestellt sind. Zweckmäßigerweise sind die Hubeinheiten hierzu auch jeweils um eine senkrechte Schwenkachse schwenkbar, um auf den oftmals nicht parallelen Kantenverlauf der Formteile eingestellt zu werden.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:

Fig. 1 eine vereinfachte Draufsicht auf eine am Ende einer Pressenstraße angeordnete Vorrichtung zum Stapeln von Formteilen in Stapelbehältern,

Fig. 2 eine vergrößerte Draufsicht auf die Vorstapeleinrichtung aus Fig. 1 und

Fig. 3 einen Teilschnitt längs der Linie III-III in Fig. 2.

Die in Fig. 1 in einer vereinfachten Draufsicht gezeigte Vorrichtung dient der Entsorgung einer Pressenstraße 1, deren Ende in der Zeichnung nur angedeutet ist. Die auf der Pressenstraße 1 hergestellten großen, im wesentlichen flachen Formteile 2, bei dem dargestellten Ausführungsbeispiel Motorhauben für Kraftfahrzeuge, gelangen auf einem Längsförderer 3, der beispielsweise aus zwei parallelen Förderbändern besteht, in eine Vorstapeleinrichtung 4, die später noch näher erläutert wird.

Dort werden aus mehreren einzelnen Formteilen 2 Vorstapel 5 gebildet, die beispielsweise vier Formteile 2 umfassen, die in vorgegebenem Abstand übereinander gehalten werden.

Der so gebildete Vorstapel 5 wird von einer Greifvorrichtung 6 übernommen, die einen herkömmlichen Industrieroboter 7 aufweist, der auf einem Schlitten 8 um eine senkrechte Achse schwenkbar aufgenommen ist. Der Schlitten 8 ist entlang einer Schlittenbahn 9 quer zur Längsrichtung des Längsförderers 3 verfahrbar.

An seinem Roboterarm 10 trägt der Industrieroboter 7 auswechselbar einen Greiferrahmen 11, der mit später noch näher erläuterten Greifelementen zum Aufnehmen und Halten des Vorstapels 5 versehen ist.

Auf der einen Seite der Schlittenbahn 9 steht ein Stapelbehälter 12 zur stehenden, geordneten Aufnahme der Formteile , und zwar der Gutteile, die keiner Nacharbeit bedürfen. Dieser Stapelbehälter 12 ist auf einer (nicht dargestellten) Verschiebebühne oder einem in Fig. 1 nur angedeuteten Behälterkarussell 13 aufgenommen. Um den Stapelbehälter 12 in seine in Fig. 1 gezeigte Beschickungsstellung neben der Schlittenbahn 9 zu bringen, wird das Behälterkarussell 13 jeweils um einen Winkelschritt, im gezeigten Beispiel jeweils um 90^, weitergeschaltet. In den übrigen drei Stellungen des Behälterkarussells 13 können die für die Bereitstellung bzw. den Abtransport des Stapel- behälters 12 erforderlichen Maßnahmen durchge- führt werden, insbesondere die Bereitstellung, das Öffnen bzw. Verschließen und die Übernahme auf eine Tansporteinrichtung für den Behälter, beispielsweise ein (nicht gezeigtes) gleisloses Flurförderzeug.

In Laufrichtung des Längsförderers 3 gesehen ist vor der Vorstapeleinrichtung 4 eine weitere Vorstapeleinrichtung 4.1 angeordnet, die in gleicher Weise wie die Vorstapeleinrichtung 4 aufgebaut ist und zur Aufnahme der Nacharbeitsteile dient. In einer zwischen dem Ende der Pressenstraße 1 und der Vorstapeleinrichtung 4.1 liegenden Kontrollstation 14 wurden die von der Pressenstraße 1 entnommenen Formteile 2 geprüft, und es wurde entschieden, ob es sich um ein Gutteil oder ein Nacharbeitsteil handelt. Die Nacharbeitsteile werden bereits in der Vorstapeleinrichtung 4.1 angehalten und aufgenommen, während die Gutteile durch die Vorstapeleinrichtung 4.1 hindurch bis in die Vorstapeleinrichtung 4 laufen und dort aufgenommen werden.

Beide Vorstapeleinrichtungen 4 und 4.1 liegen im Greifbereich des Industrieroboters 7, der auch die Nacharbeitsteile aus der Vorstapeleinrichtung 4.1 in der schon beschriebenen Weise übernimmt und in einen zweiten Stapelbehälter 12.1 absetzt, der sich auf der dem ersten Stapelbehälter 12 gegenüberliegenden Seite der Schlittenbahn 9 befindet.

An dem Ende der Schlittenbahn 9, das den Vorstapeleinrichtungen 4 und 4.1 abgekehrt ist, ist ebenfalls noch im Greifbereich des Industrieroboters 7 eine Ablage 15 für jeweils zwei Greiferrahmen 11 vorgesehen. Bei der Umstellung auf Formteile 2 von anderen Abmessungen wird der bisher verwendete Greiferrahmen 11 auf dem einen Ablageplatz der Ablage 15 abgelegt, und der Industrieroboter 7 übernimmt mit seinem Roboterarm 10 einen neuen Greiferrahmen 11, der auf der anderen Ablagefläche der Ablage 15 bereitgestellt ist.

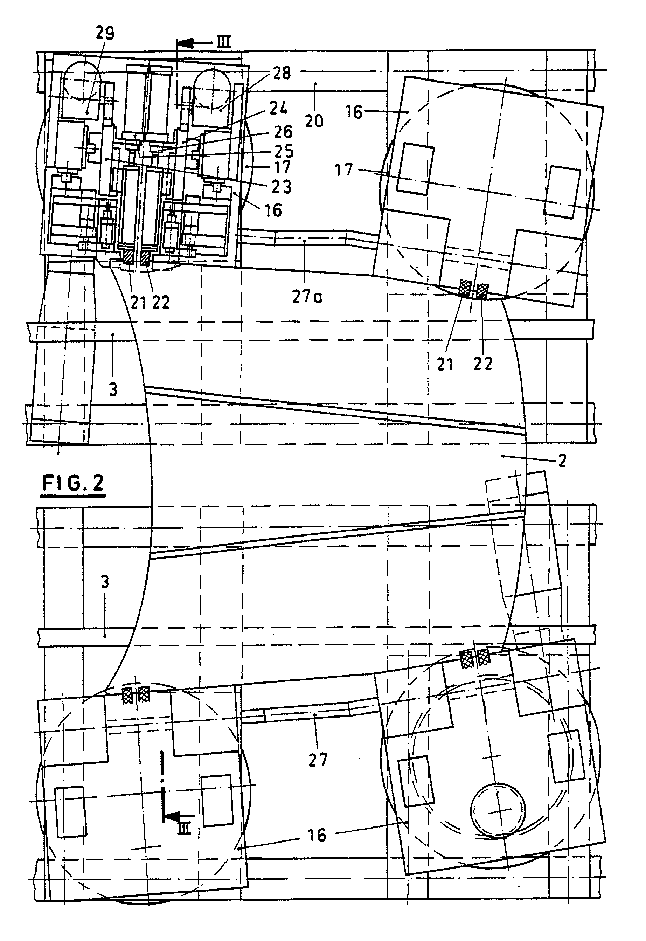

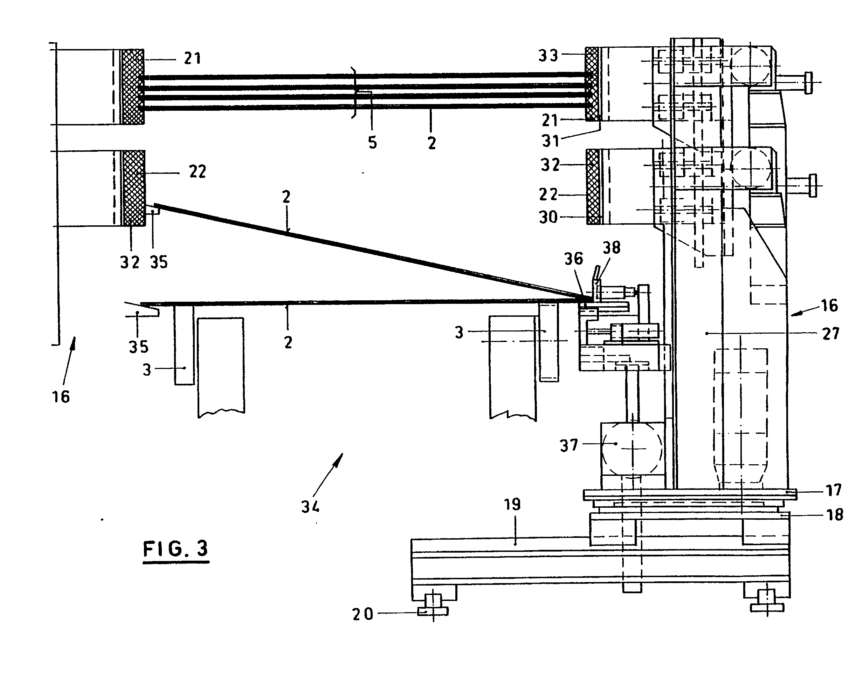

In den Fig. 2 und 3 sind Einzelheiten der Vorstapeleinrichtung 4 bzw. 4.1 dargestellt.

Die Vorstapeleinrichtung 4 weist vier Hubeinrichtungen 16 auf, die jeweils auf einem Drehtisch 17 um eine senkrechte Schwenkachse schwenkbar sind. Der Drehtisch 17 befindet sich auf einem Schlitten 18, der in Führungen 19 eines Grundgestells 20 quer zur Längsrichtung des Längsförderers 3 verfahrbar ist. Zur Umstellung auf Formteile 2 von unterschiedlichen Abmessungen sind die vier Hubeinheiten 16 somit querverfahrbar und so schwenkbar, daß sie zu den meist nicht parallelen gegenüberliegenden Kanten der Formteile 2 ausgerichtet werden können, wie in den Fig. 1 und 2 deutlich erkennbar ist.

Jede der Hubeinheiten 16 weist zwei gesondert bewegbare Formteilgreifer 21, 22 auf. Jeder Formteilgreifer 21 bzw. 22 ist an einem gesonderten Hubschlitten 23 bzw. 24 gelagert und kann dort durch eine Vorschubeinheit 25 bzw. 26 horizontal vorgeschoben und zurückgezogen werden. Die Hubschlitten 23, 24 sind an einem vertikalen Führungsständer 27 mittels Hubantrieben 28 bzw. 29 unabhängig voneinander vertikal verfahrbar. Die Hubschlitten 23, 24 und die daran aufgenommenen Formteilgreifer 21 bzw. 22 sind in der Draufsicht so nebeneinander angeordnet, daß sie bei ihren Hubbewegungen aneinander vorbeigefahren werden können. Jeder Formteilgreifer 21, 22 weist eine vertikale Greiferplatte 30, 31 auf, an deren Außenseite ein Greifpolster 32 bzw. 33 aus elastisch verformbarem Material, vorzugsweise Moosgummi, oder eine Zahnleiste angebracht ist. Wie in Fig. 3 am Beispiel der oberen Formteilgreifer 21 gezeigt ist, nehmen diese zwischen sich den Vorstapel 5 aus Formteilen 2 auf, die übereinander im vorgegeben Abstand gehalten werden, um dort von dem Greiferrahmen 11 übernommen zu werden. Gelenkwellen 27a verbinden jeweils die beiden benachbarten Hubeinheiten 16, um einen synchronen Antrieb der Hubbewegungen zu gewährleisten.

Zur Bildung des Vorstapels 5 ist unterhalb der Formteilgreifer 21, 22 in der Vorstapelstation 4 eine Hub- und Kippeinrichtung 34 angeordnet, die in jeder Hubeinheit 16 einen einzelnen Hubanschlag 35 bzw. 36 aufweist. Diese Hubanschläge 35 bzw. 36 sind jeweils durch einen Hubantrieb 37 anhebbar und absenkbar. Während die Hubanschläge 35 auf der einen Seite des Längsförderers 3 aus einfachen Mitnehmern mit nach innen abfallender Oberfläche bestehen, sind die Hubanschläge 36 auf der anderen Seite des Längsförderers 3 nicht nur seitlich verstellbar, sondern auch jeweils mit einem horizontal verfahrbaren Kantenanschlag 38 versehen.

In Fig. 3 ist gezeigt, daß ein auf dem Längsförderer 3 herangefördertes Formteil 2 zunächst in horizontaler Lage von den Hubanschlägen 35 und 36 auf beiden Seiten des Längsförderers angehoben wird. Sodann werden die Hubanschläge 35 auf der einen Seite so weit angehoben, bis sie sich im Bereich des jeweils zugeordneten unteren Formteilgreifers 22 in der für dieses Formteil vorgesehenen, durch eine Programmsteuerung vorgegebenen Höhenstellung befinden. Ausgehend von dieser Stellung wird das Formteil 2 durch die auf der anderen Seite befindlichen Hubanschläge 36 ebenfalls angehoben und zugleich durch die Kantenanschläge 38 verschoben, so daß seine obere Kante sich in das Greifpolster 32 des Formteilgreifers 22 eindrückt und von diesem gehalten wird. Wenn die Formteilgreifer 22 Zahnleisten aufweisen, werden die Kanten der Formteile in die Lücken der Zähne eingefügt. Sobald das Formteil 2 auch an seiner vom Hubanschlag 36 getragenen Seite bis in die horizontale Stellung angehoben wurde, fährt der Kantenanschlag 38 zurück und gibt das Formteil 2 frei, so daß es unter der elastischen Wirkung der Greifpolster 32 auf beiden Seiten gehalten wird.

Das nächste Formteil wird in gleicher Weise zwischen die Greifpolster 32 eingesetzt, nachdem die Formteilgreifer 22 auf beiden Seiten um den Betrag angehoben wurden, der dem vorgegebenen gegenseitigen Abstand der Formteile 2 entspricht.

Während auf diese Weise der untere Vorstapel gebildet wird, wird der vorher gebildete Vorstapel 5 vom Greiferrahmen 11 übernommen und in den Stapelbehälter 12 transportiert. Sobald auch der untere Vorstapel 5 vervollständigt ist, werden die ihn tragenden Formteilgreifer 22 nach oben gefahren. Zugleich werden die oberen Formteilgreifer 21 nach beiden Seiten zurückgezogen und nach unten verfahren, wobei sie sich an den Formteilgreifern 22 und den darin aufgenommenen Formteilen 2 unbehindert vorbeibewegen. In ihrer unteren Stellung werden die Formteilgreifer 21 dann wieder horizontal vorgefahren und stehen für die bereits beschriebene Aufnahme neuer Formteile 2 bereit.

## Ansprüche

1. Vorrichtung zum Stapeln von Formteilen (2), insbesondere großen Blechstanzteilen im Automobilbau, mit einer einen horizontalen Vorstapel von mehreren Formteilen (2) bildenden Vorstapeleinrichtung (4, 4.1), und mit einer den Vorstapel aufnehmenden Greifvorrichtung, dadurch gekennzeichnet, daß die Vorstapeleinrichtung (4, 4.1) jeweils vier den Rand der Formteile (2) haltende Hubeinheiten (16) aufweist, daß jede Hubeinheit (16) zwei unabhängig voneinander höhenverfahrbare Formteilgreifer (21, 22) aufweist, die einzeln horizontal zurückziehbar sind, und daß unter den beiden Formteilgreifern (21, 22) eine Hub- und Kippeinrichtung (34) für einzelne Formteile (2) angeordnet ist.

2. Vorrichtung nach Anspruch 1, dadurch gekennzeichnet, daß die Hubeinheiten (16) in einem Grundgestell (20) quer und längs zu den aufzunehmenden Formteilen (2) verstellbar geführt sind.

3. Vorrichtung nach Anspruch 1, dadurch gekennzeichnet, daß die Hubeinheiten (16) jeweils um eine senkrechte Schwenkachse schwenkbar sind.

4. Vorrichtung nach Anspruch 1, dadurch gekennzeichnet, daß jeder der beiden Formteilgreifer (21, 22) einer Hubeinheit (16) an einem gesonderten Hubschlitten (23, 24) horizontal verschiebbar aufgenommen ist, der an einem vertikalen Führungsständer (27) derart verfahrbar ist, daß die beiden Hubschlitten (23, 24) aneinander vorbeibewegbar sind.

5. Vorrichtung nach Anspruch 1, dadurch gekennzeichnet, daß jeder Formteilgreifer (21, 22) eine vertikale Greiferplatte (30, 31) mit einem Greifpolster (32, 33) aus elastisch verformbarem Material oder eine Zahnleiste trägt.

6. Vorrichtung nach Anspruch 5, dadurch gekennzeichnet, daß das elastisch verformbare Material Moosgummi ist.

7. Vorrichtung nach Anspruch 1, dadurch gekennzeichnet, daß die Hub- und Kippeinrichtung (34) für einzelne Formteile (2) aus einzelnen Hubanschlägen (35, 36) besteht, die jeweils an einer Hubeinheit (37) angeordnet und auf beiden Seiten des Formteils (2) unabhängig anhebbar sind.

8. Vorrichtung nach Anspruch 7, dadurch gekennzeichnet, daß die Hubanschläge (36) auf der einen Seite der Formteile (2) jeweils einen horizontal verfahrbaren Kantenanschlag (38) aufweisen.

FIG.1

FIG. 2

FIG. 3